(19) Europäisches Patentamt
European Patent Office
Office européen des brevets

(11) **EP 4 209 006 B1**

(12) **EUROPEAN PATENT SPECIFICATION**

(45) Date of publication and mention
of the grant of the patent:
**24.09.2025 Bulletin 2025/39**

(21) Application number: **20961079.9**

(22) Date of filing: **11.11.2020**

(51) International Patent Classification (IPC):
**G01S 5/16** (2006.01)

(52) Cooperative Patent Classification (CPC):
**G01S 5/16**

(86) International application number:
**PCT/CN2020/128215**

(87) International publication number:
**WO 2022/099522 (19.05.2022 Gazette 2022/20)**

(54) **DEVICE AND METHOD FOR VERIFYING ESTIMATED DEPTH INFORMATION**

VORRICHTUNG UND VERFAHREN ZUR VERIFIZIERUNG GESCHÄTZTER
TIEFENINFORMATIONEN

DISPOSITIF ET PROCÉDÉ DE VÉRIFICATION D'INFORMATIONS DE PROFONDEUR ESTIMÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.07.2023 Bulletin 2023/28**

(73) Proprietor: **Huawei Technologies Co., Ltd.**
**Shenzhen, Guangdong 518129 (CN)**

(72) Inventors:
• **EZRA, Shahar Ben**
**Shenzhen, Guangdong 518129 (CN)**
• **BARZELAY, Zohar**
**Shenzhen, Guangdong 518129 (CN)**
• **SASON, Eli**
**Shenzhen, Guangdong 518129 (CN)**
• **CHEN, Yilun**
**Shenzhen, Guangdong 518129 (CN)**

(74) Representative: **Roth, Sebastian**
**Mitscherlich PartmbB**
**Patent- und Rechtsanwälte**
**Karlstraße 7**
**80333 München (DE)**

(56) References cited:
**WO-A1-2020/140047      WO-A1-2020/152437
CN-A- 111 340 868      CN-A- 111 753 961
US-A1- 2016 048 726      US-A1- 2018 341 854**

• **LIU XIAOMIN, DU MENGZHU;MA ZHIBANG;ZHU
YUNFEI;CHEN PENGBO;MA FENGYING: "Depth
Estimation Method of Light Field Image Based on
Occlusion Scene", ACTA OPTICA SINICA,
SHANGHAI KEXUE JISHU CHUBANSHE ,
SHANGHAI, CN, vol. 40, no. 5, 31 March 2020
(2020-03-31), CN
, pages 85 - 91, XP055929602, ISSN: 0253-2239,
DOI: 10.3788/AOS202040.0510002**

**Description**

TECHNICAL FIELD

The present disclosure relates generally to the field of data processing, and particularly to a device and a computer program product for verifying estimated depth information. For example, the device and the computer program product of the present disclosure may verify an accuracy of a deployed depth estimation system. For instance, such a depth estimation system may be implemented in a vehicle, and may provide an estimated depth information. The device and computer program product of the present disclosure may receive the estimated depth information of the deployed depth estimation system, and may verify an accuracy of the received estimated depth information. Further, the device and computer program product may adjust (e.g., calibrate) the depth estimation system.

WO 2020152437 A1 discloses an image processing system to estimate depth for a scene. The image processing system includes a fusion engine to receive a first depth estimate from a geometric reconstruction engine and a second depth estimate from a neural network architecture. The fusion engine is configured to probabilistically fuse the first depth estimate and the second depth estimate to output a fused depth estimate for the scene.

WO 2020140047 A1 discloses a deep neural network (DNN) that is trained to accurately predict, in deployment, distances to objects and obstacles using image data alone.

Liu Xiaomin, Du Mengzhu;Ma Zhibang;Zhu Yunfei;Chen Pengbo;Ma Fengying: "Depth Estimation Method of Light Field Image Based on Occlusion Scene", Acta Optica Sinica, Shanghai Kexue Jishu Chubanshe , Shanghai, CN, vol. 40, no. 5, 31 March 2020, pages 85-91, describes a depth estimation technique for light field images, using multi-cue fusion to tackle occlusion problems. It combines adaptive defocus and angular entropy metrics for scene information, then refines depth and confidence with edge data using a Canny operator. The process culminates in a precise depth map with superior smoothing and edge clarity.

BACKGROUND

Generally, Smart Driving Assistance Systems perform an analysis of a driving scene. However, it is important to obtain an accurate analysis of the driving scene, in order to enable a safe driving experience. Moreover, an accurate scene analysis is made significantly easier when the distance of objects to the vehicle is known. For this purpose, car-mounted distance-measuring devices such as light detection and ranging (LIDAR) are used. However, LIDAR distance-measuring systems are, for example, expensive, difficult to install and maintain, and might not perform well under extreme weather conditions such as fog. Therefore, measuring distances of objects using vehicle-mounted cameras only may be advantageous.

However, cameras do not measure distances, but rather the colors of objects in the captured scene. Therefore, various algorithms may be used to infer the distance of an object, using the captured images. For example, deep-convolutional-networks may be used to perform such a per-pixel prediction of the distance of each pixel from the camera. However, an issue of deep neural networks is that they are prone to overfitting on their training data. This means that a change in the imaging conditions can be detrimental to the accuracy of the prediction algorithms, e.g., may require a change to a different camera setup for acquiring training images and may increase the inference time.

However, despite progress made in algorithmic estimation of depth from a single image, per-vehicle verification and fine-tuning methods of such depth-estimation setups are still lagging behind. They either make assumptions that do not meet realistic conditions, or are too expensive to use in actual production.

Furthermore, an estimated depth from an image sequence may be performed by establishing a pixel-level correspondence between the images over multiple time-frames, as well as, an error-free knowledge of the relative motion between multiple frames. This is an error-prone process. To make the process error-free, a long and expensive procedure should be performed, in order to equip each produced car-camera-computer setup with expensive hardware.

SUMMARY

In view of the above-mentioned problems and disadvantages, embodiments of the present disclosure aim to improve conventional devices and methods for verifying an estimated depth information.

An objective is to provide a device and a computer program product for verifying estimated depth information of another device (e.g., a depth estimation system, which may be installed on a vehicle). For example, the device and the computer program product of the present disclosure allow to verify an accuracy of a deployed depth-estimation system.

Moreover, the device and the computer program product of the present disclosure should be able to adjust (e.g., auto-calibrate) a depth-estimation system after its deployment on a vehicle.

The device and the computer program product of the present disclosure may facilitate, e.g., a fast and scalable verification of a vehicle depth-prediction system (i.e., a depth estimation system installed on a vehicle). For example, as autonomous driving becomes more ubiquitous and more relied upon, so do its components. Moreover, a depth-prediction system installed on vehicles may need to be verified. For example, in order to enable mass-production.

These and other objectives are achieved by the embodiments of the disclosure as described in the enclosed independent claims. Advantageous implementations of the embodiments of the disclosure are further defined in the dependent claims.

A first aspect of the present disclosure provides a device for verifying estimated depth information, the device configured to obtain an image of a scene, wherein the image comprises at least one object of interest having a set of points, obtain a height information for at least one point from the set of points of the object of interest, estimate a first depth information for the at least one point, based on the obtained height information and detecting a corresponding position of the at least one point in the obtained image, receive, from another device, a second depth information for the at least one point, and determine a validity of the estimated second depth information, based on determining a measure of dissimilarity between the first depth information and the second depth information for the at least one point.

The device may be, or may be incorporated in, an electronic device such as a computer, or a vehicle control system, or a driving assistance system of a vehicle.

The other device may be a depth-estimation system that may also be installed on a vehicle. The device of the first aspect and the other device may be integrated into one device, e.g., a processor installed in the vehicle. Furthermore, the device of the first aspect verifies an estimated depth information of the other device (e.g., the depth-estimation system installed on the vehicle), and may further adjust or calibrate the estimated depth information of the other device.

In some embodiments, the device of the first aspect may be installed on the same vehicle as the other device (e.g., the depth-estimation system installed on the vehicle).

In some embodiments, the device of the first aspect may also be located on a remote location (i.e., not installed in the vehicle as the other device). For example, the other device that may be the depth-estimation system may be installed on a vehicle and may estimate the second depth information, and sends it to the device of the first aspect. Moreover, the device of the first aspect that is at a remote location receives the estimated second depth information and verifies and/or adjusts (e.g., calibrate) it and may send back information accordingly.

Generally, the device of the first aspect for verifying the estimated depth information obtains (e.g., receive) an image having an object of interest with a set of points. Moreover, the device obtains height information for at least one point from the set of the points of the object of interest. Moreover, the device estimates a first depth information for the at least one pint.

Furthermore, the other device (e.g., the deployed depth estimation system on the vehicle) may receive the image and may further estimate a second depth information for the at least one point. The other device sends the estimated second depth to the device. Further, the device determines a validity for the estimated second depth information. For example, the validity may be to verify the estimated second depth information. In particular, the device may verify (e.g., fine-tune) the method used for estimation of second depth information by the other device. The device compares the estimated first depth information to the second depth information and determines a measure of dissimilarity. Moreover, when the measure of dissimilarity is within a required tolerance, the device may verify the estimated second depth information that is provided by the other device.

In an implementation form of the first aspect, the first depth information is estimated based on receiving position information with respect to a ground plane, of a camera capturing the image of the scene, determining, in the obtained image, a set of pixels corresponding to the position of the at least one point for which the height information is obtained, and estimating the first depth information based on the determined set of pixels in the obtained image and the received position information of the camera.

For example, it may be assumed that the position and angle of the camera capturing the image with respect to a ground-plane is pre-calculated, e.g., by a known camera calibration algorithm. The device may detect a set of pixel locations in the image that were pre-defined, and their height information is pre-measured. Furthermore, by using the camera-to-plane parameters, the device may estimate the first depth information from the height information of the points in the set of pixel locations using a height-to-depth formula.

The device may use the height measurement as a substitute for depth measurements. For example, the depth or the distance is relative to a given point. Therefore, it may be difficult to calibrate and verify depth-predicting systems, for example, the location and orientation of the system with respect to the scene that needs to be established. Unlike depth, the height from a ground-plane is absolute in any view-point. Besides, the device may enable to estimate the depth of an object with a known height from any view point in the scene. This enables the device to provide a depth ground-truth from any view point in the scene, and not only from a single view point.

In a further implementation form of the first aspect, the device is further configured to adjust the second depth information, for the at least one point, when the measure of dissimilarity is above a first threshold, and determine a validity of the adjusted second depth information, based on determining a measure of dissimilarity between the first depth information and the adjusted second depth information for the at least one point.

In a further implementation form of the first aspect, determining the validity comprises verifying a second depth information, for the at least one point, when the measure of dissimilarity is below a first threshold.

For example, the first threshold may be determined based on operational aspects of the system and accepted sensitivity. For instance, the first threshold may be set based on a metric threshold. Furthermore, below the first threshold, the depth estimation system may be considered to be reliable enough, for use in an autonomous vehicle. Moreover, the first threshold may be set based on, e.g., metric measurements such as maximal absolute deviation, mean squared error, root mean square error, etc.

In a further implementation form of the first aspect, adjusting the second depth information comprises fine-tuning a depth estimation system of the other device, based on an optimization technique.

For example, the other device (e.g., the deployed depth estimation system on the vehicle) may use a depth-predicting algorithm that may be unknown to the device of the first aspect. Moreover, the device may use an optimization technique, in order to adjust the estimated second depth information of the other device.

For instance, the device may perform a black-box optimization process. In particular, when a depth-predicting algorithm of the other device is known to the device, the device may update the inner parameters of the depth-predicting algorithm. However, when a depth-predicting algorithm of the other device is unknown to the device, it may be possible for the device to adjust the estimated second depth information, even without access to these inner parameters. This may allow a stable production-process, which is not dependent upon specific algorithmic implementation.

In a further implementation form of the first aspect, the device is further configured to optimize a depth estimation system of the other device based on the first depth information, and receive, from the other device, an adjusted second depth information estimated based on its optimized depth estimation system.

For example, the device may receive a depth-predicting algorithm of the other device (e.g., the deployed depth estimation system that may be installed on the vehicle). Moreover, the device may update the depth-predicting algorithm, e.g., by updating its parameters. In other words, the device may calibrate the depth-predicting algorithm of the other device. Furthermore, the other device may estimate an adjusted second depth information and may send it to the device. The adjusted second depth information may be estimated by the optimized depth estimation system.

The device of the first aspect may be able to adjust (e.g., calibrate) the depth estimation system on the other device. For example, the device of the first aspect may be able to calibrate the deployed depth estimation system on vehicles.

In a further implementation form of the first aspect, the device is further configured to determine a first three-dimensional (3D) depth-map representation for the at least one object of interest, based on determining a respective first depth information for a subset of points from the set of points, and determine a second 3D depth-map representation for the at least one object of interest, based on determining a respective second depth information for the subset of points from the set of points.

For example, in some embodiments, more than one point from the set of the points of the object of interest may be used, without limiting the present disclosure. For instance, in some embodiments, a 3D depth-map representation for the object of interest may be used. The first 3D depth-map representation may be determined based on the estimated first depth information. Moreover, the second 3D depth-map representation may be determined based on the estimated second depth information.

In a further implementation form of the first aspect, the device is further configured to determine a measure of dissimilarity between the first 3D depth-map representation and the second 3D depth-map representation for the at least one object of interest.

In a further implementation form of the first aspect, the device is further configured to verify the second 3D depth-map representation, when the measure of dissimilarity is below a second threshold, or adjust the second 3D depth-map representation, in particular by adjusting one or more of second depth information, when the measure of dissimilarity is above the second threshold.

For example, the device may verify and may tune a 3D object detection algorithm of the other device (e.g., the deployed depth estimation system on the vehicle).

For example, the second threshold may be obtained based on the first threshold. In particular, the second threshold may be set such that it means that the system is operational (for instance, for 3D object detection), if some error measure is below a task-specific threshold.

In particular, the device may use the pre-measured heights on several locations on objects in a scene. Similarly to the estimated depth-verification process, the described procedure may be used to perform verification of a 3D object detection system. In such a system, location, orientations, and extent of 3D objects (such as vehicles, cars, pedestrians, etc.) need to be established. For example, when the pre-measured locations on the objects are marked on the extremities of the object, the predicted extent of the object can be verified, at least for the object's visible parts in each frame. Similarly, the objects orientation and depth-location may be inferred. Thus, the described procedure for the verification of the estimated second depth information, may be used for verifying a 3D object detection algorithm. Moreover, the device may verify and may further adjust (tune) a 3D object detection algorithm on a per-car basis, e.g., similar to the depth-verification-and-tuning mechanism described above.

In a further implementation form of the first aspect, the measure of dissimilarity is determined based on one or more of:

- computing a mean square error,
- computing a mean absolute error,
- computing an absolute relative error.

In a further implementation form of the first aspect, the device is further configured to send an image to a remote device, and obtain the measure of dissimilarity, from the remote device.

In a further implementation form of the first aspect, the scene is a static scene and the at least one object of interest is located within the static scene.

For example, in some embodiments the scene may be a static scene. Moreover, in some embodiments the scene may be a dynamic scene. Furthermore, the device may perform multiple measurements of a dynamic scene. The device may only rely on a height measurements, which remain unchanged when objects (such as people and cars) move across the scene. This enables verification and adjustment of the combined camera and algorithm depth prediction system in a scene, wherein both the autonomous vehicle is moving, and also the independent objects are moving.

A second aspect of the present disclosure provides a computer program product comprising instructions, which, when the program is executed by a computer, cause the computer to carry out the steps of a method to be performed, wherein the method is for verifying estimated depth information, and comprises obtaining an image of a scene, wherein the image comprises at least one object of interest having a set of points, obtaining a height information for at least one point from the set of points of the object of interest, estimating a first depth information for the at least one point, based on the obtained height information and detecting a corresponding position of the at least one point in the obtained image, receiving, from another device, a second depth information for the at least one point, and determining a validity of the estimated second depth information, based on determining a measure of dissimilarity between the first depth information and the second depth information for the at least one point.

In an implementation form of the second aspect, the first depth information is estimated based on receiving position information with respect to a ground plane, of a camera capturing the image of the scene, determining, in the obtained image, a set of pixels corresponding to the position of the at least one point for which the height information is obtained, and estimating the first depth information based on the determined set of pixels in the obtained image and the received position information of the camera.

In a further implementation form of the second aspect, the method further comprises adjusting the second depth information, for the at least one point, when the measure of dissimilarity is above a first threshold, and determining a validity of the adjusted second depth information, based on determining a measure of dissimilarity between the first depth information and the adjusted second depth information for the at least one point.

In a further implementation form of the second aspect, determining the validity comprises verifying a second depth information, for the at least one point, when the measure of dissimilarity is below a first threshold.

In a further implementation form of the second aspect, adjusting the second depth information comprises fine-tuning a depth estimation system of the other device, based on an optimization technique.

In a further implementation form of the second aspect, the method further comprises optimizing a depth estimation system of the other device based on the first depth information, and receiving, from the other device, an adjusting second depth information estimated based on its optimized depth estimation system.

In a further implementation form of the second aspect, the method further comprises determining a first 3D depth-map representation for the at least one object of interest, based on determining a respective first depth information for a subset of points from the set of points, and determining a second 3D depth-map representation for the at least one object of interest, based on determining a respective second depth information for the subset of points from the set of points.

In a further implementation form of the second aspect, the method further comprises determining a measure of dissimilarity between the first 3D depth-map representation and the second 3D depth-map representation for the at least one object of interest.

In a further implementation form of the second aspect, the method further comprises verifying the second 3D depth-map representation, when the measure of dissimilarity is below a second threshold, or adjusting the second 3D depth-map representation, in particular by adjusting one or more of second depth information, when the measure of dissimilarity is above the second threshold.

In a further implementation form of the second aspect, the measure of dissimilarity is determined based on one or more of:

- computing a mean square error,
- computing a mean absolute error,
- computing an absolute relative error.

In a further implementation form of the second aspect, the method further comprises sending an image to a remote device, and obtaining the measure of dissimilarity, from the remote device.

In a further implementation form of the second aspect, the scene is a static scene and the at least one object of interest is located within the static scene.

The computer program product of the second aspect achieves the advantages and effects described for the device of the first aspect.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

BRIEF DESCRIPTION OF DRAWINGS

The above described aspects and implementation forms will be explained in the following description of specific embodiments in relation to the enclosed drawings, in which

FIG. 1   depicts a schematic view of a device for verifying estimated depth information, according to an embodiment of the disclosure;

FIG. 2   shows a diagram for obtaining height information for a point on an object of interest;

FIG. 3   shows a geometric representation used for estimating a first depth information for a point based on its height information;

FIG. 4   shows a diagram illustrating a pipeline for estimating a first depth information for a point based on its height information; and

FIG. 5   depicts a schematic view of a flowchart of a method related to a computer program product for verifying estimated depth information, according to an embodiment of the disclosure.

DETAILED DESCRIPTION OF EMBODIMENTS

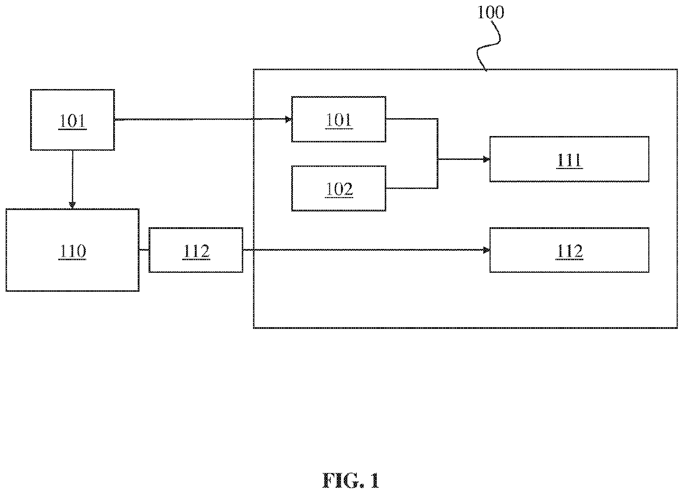

FIG. 1 depicts a schematic view of a device 100 for verifying estimated depth information, according to an embodiment of the disclosure.

The device 100 may be, for example, an electronic device such as a computer or processor.

The device 100 is configured to obtain an image 101 of a scene, for instance from a camera, wherein the image 101 comprises at least one object of interest 201 having a set of points 211, 212, 213, 214, 215, 216.

The device 100 is further configured to obtain a height information 102 for at least one point from the set of points 211, 212, 213, 214, 215, 216 of the object of interest 201.

The device 100 is further configured to estimate a first depth information 111 for the at least one point, based on the obtained height information 102, and detect a corresponding position of the at least one point in the obtained image 101.

The device 100 is further configured to receive, from another device 110, a second depth information 112 for the at least one point.

The other device 110 may be, for example, a depth estimation system, which may be deployed on a vehicle.

The device 100 is further configured to determine a validity of the estimated second depth information 112, based on determining a measure of dissimilarity between the first depth information 111 and the second depth information 112 for the at least one point.

Moreover, the device 100 may verify the second depth information 112 that is estimated by the other device 110. Furthermore, the device 100 may verify a depth estimation algorithm that is used by the other device 110 (e.g., the deployed depth estimation system on the vehicle) for estimating the second depth information 112.

Furthermore, the device 100 may adjust (e.g., it may calibrate) a depth estimation algorithm that is used by the other device 110 (e.g., the deployed depth estimation system on the vehicle) for estimating the second depth information 112.

In particular, the device 100 may perform a procedure to verify and calibrate the depth estimates of a depth-estimation system of the other device 110.

The depth-estimation system of the other device 110 may estimate the second depth information 112, for the at least one point, based on the image 101. Moreover, the other device 110 may send the estimated second depth information 112 to the device 100. The device 100 may estimate a first depth information 111, for the at least one point, based on the image 101 and obtaining the height information 102.

The device 100 further determines the validity of the estimated second depth information 112 and/or a depth estimation algorithm that is used by the other device 110 and/or the deployed depth estimation system on the other device 110. For example, the device 100 determines the measure of dissimilarity between the first depth information 111 and the second depth information 112. Moreover, the device 100 may verify that the second depth information 112 that the other device 110 provides are within a required tolerance. Moreover, in order to fine/tune the second depth information 112, the device 100 may update a depth estimation algorithm that is used by the other device 110 such that the second depth information 112 estimates from the updated depth estimation algorithm are more similar to the first depth information 111, for the at least one point.

The device 100 may enable a fast and scalable adjustment of a vehicle depth-prediction system. For example, by using the collected ground-truth measurements of the static objects whose height has been measured. Thus, optimizing per-car depth predictions is enabled.

The device 100 may comprise processing circuitry (not shown in FIG. 1) configured to perform, conduct or initiate the various operations of the device 100 described herein. The processing circuitry may comprise hardware and software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multi-purpose processors. In one embodiment, the processing circuitry comprises one or more processors and a non-transitory memory connected to the one or more processors. The non-transitory memory may carry executable program code which, when executed by the one or more processors, causes the device 100 to perform, conduct or initiate the operations or methods described herein.

In some embodiments, a static scene including objects may be used. These objects may have height measured on specific locations within them. These locations are further marked in a way that allows for an image-processing algorithm to locate it in an exact manner. These can be QR codes, calibration patterns, or any other marking which allows an exact localization of such a marking in an acquired RGB image.

In some embodiments, the scene is dynamic, further, the objects are not dummy objects, but real people and real cars moving around. Moreover, the pre-measured height-locations are pre-marked on the real people and real cars.

In some embodiments, the computer computing the depth map might not be mounted on the car itself. Instead, the camera may send the images to a remote location for depth estimation and processing, and receives commands (e.g. "drive forward", "break"), in response. The suggested framework would then allow the remote depth-estimating computer to keep a set of car-specific parameters, in order to provide car-specific tuned depth estimations. These would then affect the sent commands to the car.

In some embodiments, an infra-red camera is mounted on each vehicle, and then, the infra-red camera may be calibrated with respect to the car's camera. Then the height-markings on the dummy objects (that have infra-red visible markings) are only visible to the infra-red camera. This allows to exact localization of the markings in the infra-red camera. Following the mutual infra-red to Red/Green/Blue (RGB) camera calibration, these locations can be provided in the RGB -camera coordinate system.

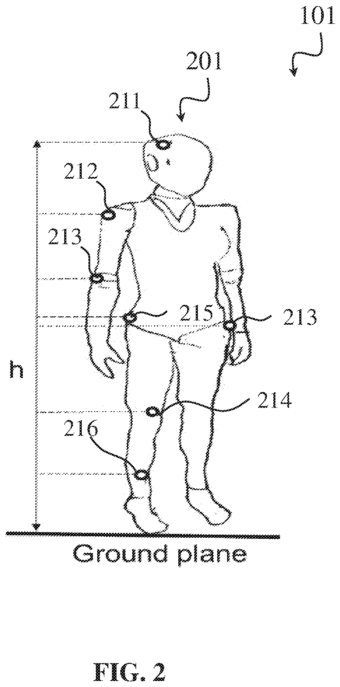

FIG. 2 shows a diagram for obtaining height information 102 for a point on an object of interest.

The object is, for example, a dummy object and the device 100 may obtain the height information.

For example, a dummy object or multiple dummy objects may be used, for obtaining the height information 102. Moreover, the dummy objects may be similar to real objects in the real world, for example, pedestrian, cars, trucks, traffic signs, road cones, etc. Furthermore, these are the type of objects that the deep neural network (DNN) may be trained to predict second depth information.

For instance, for a given dummy object, the device 100 may obtain some arbitrary number of height-measurements at arbitrary positions on the object.

For instance, at first, the height information may be measured, above ground, in multiple key points 211, 212, 213, 214, 215, 216 of the object 201, e.g., head 211, shoulder 212, elbow 213, knee 214, etc., and by using a simple measuring tool.

In particular, the height information may be measured for multiple objects of multiple types. These set of objects, denoted as object of interest (OOI). The OOI may further be used for the verification of the second depth information 112 estimated by the other device 110. This type of measurements are easily obtained, for example, the height measurements may be obtained only once and regardless of the other devices 110.

The measured height information 102 for the set of points of the object of interest 201 may be provided to the device 100.

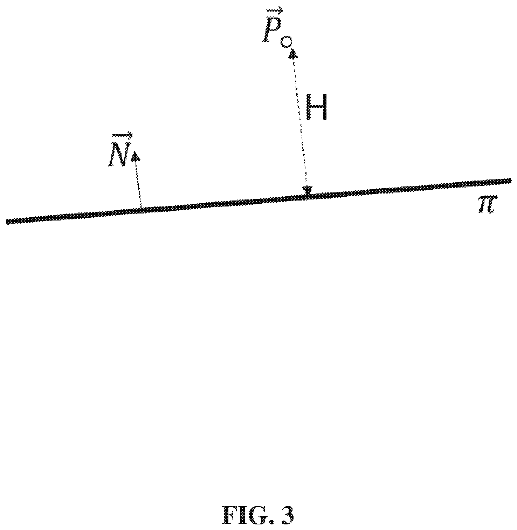

Reference is made to FIG. 3, which shows a geometric representation used for estimating a first depth information 111 for a point P based on its height information 201.

For example, the device 100 may comprise a height to depth tool which may estimate estimating the first depth information 111.

The height information for a set of point on OOI may be obtained. The OOI may be placed in a scene at an unknown depth, and an image may be captured using the deployed system on the vehicle. This procedure can be done, e.g., in a parking lot, where the vehicle comes out of production; and multiple images may be captured, as the vehicle drives around. At the end of this step, a set of images may be obtained, where the images include the OOI at different locations in the image, and, at different positions in the scene.

Considering that a single image is obtained using the examined system, the set of points (e.g. head, shoulder, elbow etc.) may be detected, in the captured image. For example, a Key-points localization may be done manually per image or automatic in various ways. One alternative is to use optical markers such as or that can be physically placed on arbitrary points on the dummy object. Such markers may have a unique signature that can easily be identified in an image. Another alternative is to use some texture that can be painted on the object or worn as clothes. Such texture can be used to identify unique points on the object. Moreover, marker-less methods may also be used that are able to identify well-defined locations on the dummy object as key points (e.g., the tip of the nose, elbows, knees, shoulders, etc.). Notice that not all key points must be located at each image, and a different subset of points may be used in each image. Moreover, by using the 2D location of the key points in the image, it may be possible to compute the 3D depth for each key point using basic camera geometry.

At next, an example of estimating the first depth information 111 is discussed with respect to FIG. 3. The ground plane $\pi$ is shown with a normal $\overline{N}$ and $d_\pi$.

Let us consider a scene point $\overline{P} = (X, Y, Z)^T$, the 3D coordinates (in three dimensions X, Y, Z) of some scene point which is one of the key points.

Let $\vec{p} = (u, v, 1)^T = \frac{1}{Z}K\vec{P}$ denote the image coordinates of $\overline{P}$, and K is $3 \times 3$ matrix representing the intrinsic calibration parameters of the camera. For any scene point of , the following expression can be written:

$$\vec{N}^T \cdot \vec{P} = d_\pi + H$$

where $H$ denotes the perpendicular distance of $\overline{P}$ from the plane $\pi$.

Moreover, by using the above notations and by using $\overline{P} = Z \cdot K^{-1} \cdot \vec{p}$, the following expression can be obtained:

$$Z = \frac{d_\pi + H}{\vec{N}^T \cdot K^{-1} \cdot \vec{p}}$$

In this equation, it is assumed that the ground plane parameters $\overline{N}$ and $d_\pi$, and the intrinsic calibration matrix K are known. Thus, given the (u, v) coordinates of a key point and the associated height measurement H of that point, Z can be computed which represents the depth of the key point at the scene.

The result of this step may be a set of sparse depth map $\{\hat{D}_i\}$ with sparse depth measurements at the key points on the OOI. This depth maps 401 may be used as semi-ground truth measurements which can be used for verification and auto calibration of our depth-estimation system.

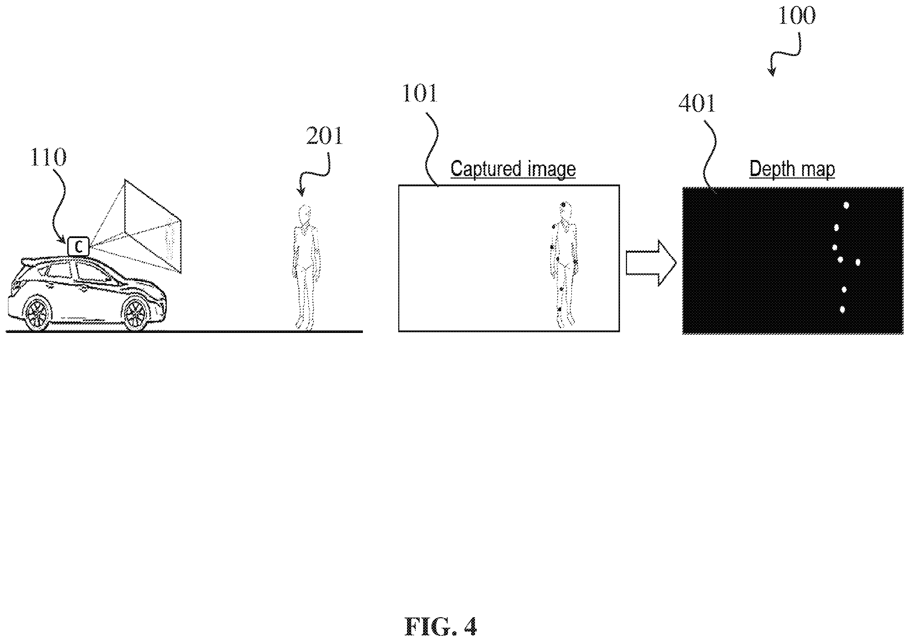

FIG. 4 shows a diagram illustrating a pipeline for estimating a first depth information 111 for a point based on its height information.

A camera is mounted on a vehicle, and a connected computer, installed on the vehicle, is running a depth-prediction algorithm on the incoming sequence of images. For example, a set of images of one or multiple OOI 201 may be obtained using the inspected system. Those images may be used, for example, by the depth estimation system of the other device 110, and a set of dense depth-maps $\{D_i\}$ predictions may be obtained.

Also, the procedure discussed above for estimating the depth information based on the height information may be used, in order to obtain a set of sparse semi-GT depth maps $\{\hat{D}_i\}$ with depth-measurements at those key-points pixels.

Moreover, the device 100 may compare these two sets of depth maps and may determine indication for the correctness and accuracy of the depth estimation system of the other device 110.

For example, in order to verify the correctness of the depth-estimation system for a Go/No-Go decision, the device 100 may use a simple binary tests that can be hand-crafted to specific requirements. Examples of such tests are as follows:

- Counting the number of pixels, where the prediction is distant from the GT more than T[m], where T is a threshold specifying the required accuracy of the system.

$$\sum_i \mathbb{1}(\hat{d}_i - d_i < T)$$

- Computing the mean square error (MSE) $\frac{1}{N}\sum_i(\hat{d}_i - d_i)^2$
- Computing the mean absolute error $\frac{1}{N}\sum_i|\hat{d}_i - d_i|$
- Computing the absolute relative error $\frac{1}{N}\sum_i \frac{|\hat{d}_i - d_i|}{\hat{d}_i}$

Moreover, the device 100 may use any one of these tests or a combination of multiple test to determine whether the depth estimation system of the other device 110 is accurate enough to be deployed or it needs further calibration.

For example, when the inspected depth estimation system of the other device 110 did not pass the verification tests, the device 100 may use the semi-GT depth maps to auto-calibrate the depth-estimation system of the other device 110.

In a first scenario, the depth estimation system of the other device 110 is unknown to the device 100. In this case, the device 100 treats the depth estimation system of the other device 110 as a black-box.

In the first scenario, a depth-estimation system which is mounted on a vehicle, and the device 100 treats it as a black-box that given an image produces a dense depth-map $D$.

The device 100 may use a scaled and biased version of the depth map $\tilde{D} = a \cdot D + b$, where $a$, $b$ are global parameters. Further, an optimization problem may be defined to find the optimal $a$, $b$, as follows:

$$\underset{a,b}{\operatorname{argmin}}\left\|\hat{D}_i - \tilde{D}_i\right\|^2 = \left\|\hat{D}_i - (a \cdot D_i + b)\right\|^2$$

This problem may be solved using any standard least square solver. Further, once the optimal $a$, $b$ are found, they can be incorporated into the system as a post processing step, and afterwards, on each depth map that the algorithm generates, the depth maps may be scaled using this parameters.

Note that a linear model is used to correct the depth map. This type of model fits well to the most of the possible perturbation in the depth maps. Even when considering a higher-dimension perturbation, it can modelled by using the linear model with minor loss of information.

In a second scenario, the depth estimation system of the other device 110 is known to the device 100, and the device 100 has access to its network architecture and its model weights that can be fine-tuned.

In this case, the device 100 has access to the depth-estimation network architecture and weights. For example, the device 100 may perform a fine/tune epoch using only the semi-GT depth maps obtained using the height to depth tool. During this training epoch the device 100 may use a supervised regression loss that might penalize predictions which deviate from the semi-GT measurements, as follows:

$$L = \frac{1}{N} \sum_i (\hat{d}_i - d_i)^2$$

This process may be done on any vehicle separately to compensate for specific perturbations in each vehicle.

Furthermore, a transmission device may be used to transmit the images acquired by the on-car camera. The device also transmits the per-image depth estimates. These depth estimates and corresponding images are then passed to a computer. The computer locates the pre-defined height-measured locations on the dummy objects in each of the transmitted images. For example, it uses the pre-measured heights for each of the locations within the above-defined formulas to compute the depth of the visible features in each frame. It also extracts the transmitted depth estimates of each of these locations. It then uses them to verify the depth estimation system, as well as to refine it.

In some embodiments, a car may be used with a mounted camera and a connected computer which estimates depth from the acquired camera images. The aim is to verify correctness of the depth estimation process. This is done post-production, after said camera and computer are mounted on car. The car goes from the production factory to a parking lot, where said dummy objects within a static scene are present. The car drives around the parking lot, takes images and produces depth estimations for the scene. Then, it transmits the pairs of <image, depth> to a computer, which uses this set of measurements to verify and fine-tune the car's system. The car's software/firmware is updated. It is now ready to go on the road.

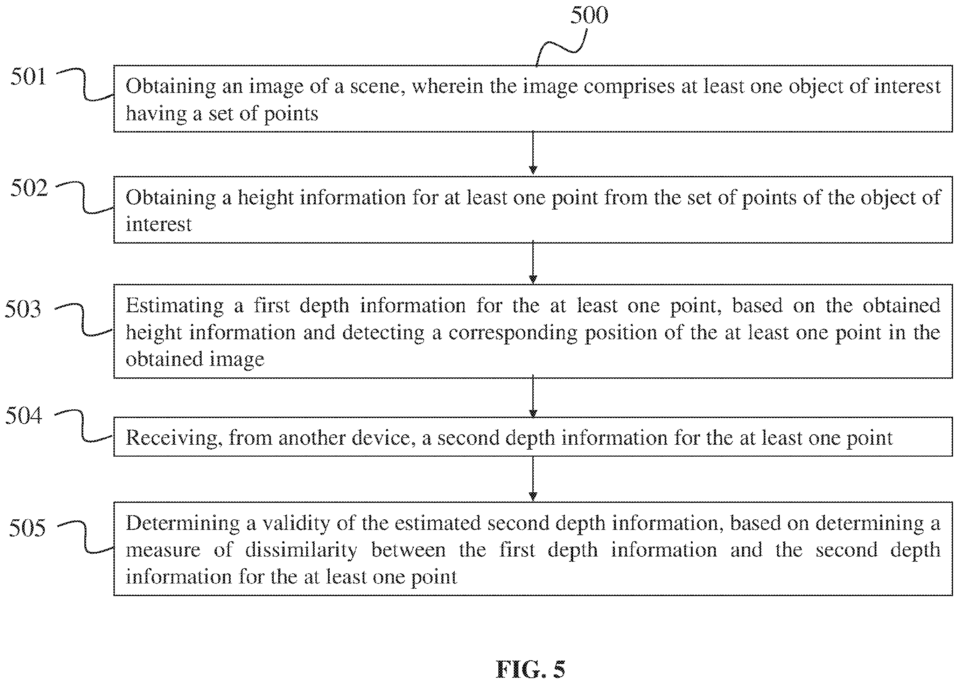

FIG. 5 shows a method 500 related to a computer program product according to an embodiment of the disclosure for verifying estimated depth information

The method 500 is performed by a computer. The method 500 may be carried out by the device 100, as it is described above.

The method 500 comprises a step 501 of obtaining an image 101 of a scene, wherein the image 101 comprises at least one object of interest 201 having a set of points 211, 212, 213.

The method 500 further comprises a step 502 of obtaining a height information 102 for at least one point from the set of points 211, 212, 213 of the object of interest 201.

The method 500 further comprises a step 503 of estimating a first depth information 111 for the at least one point, based on the obtained height information 102 and detecting a corresponding position of the at least one point in the obtained image 101.

The method 500 further comprises a step 504 of receiving, from another device 110, a second depth information 112 for the at least one point.

The method 500 further comprises a step 505 of determining a validity of the estimated second depth information 112, based on determining a measure of dissimilarity between the first depth information 111 and the second depth information 112 for the at least one point.

The present disclosure has been described in conjunction with various embodiments as examples as well as implementations. However, other variations can be understood and effected by those persons skilled in the art and practicing the claimed disclosure, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A device (100) for verifying estimated depth information, the device (100) configured to:

    obtain an image (101) of a scene, wherein the image (101) comprises at least one object of interest (201) having a set of points (211, 212, 213);
    obtain a height information (102) for at least one point from the set of points (211, 212, 213) of the object of interest (201);
    estimate a first depth information (111) for the at least one point, based on the obtained height information (102) and detect a corresponding position of the at least one point in the obtained image (101);
    receive, from another device (110), a second depth information (112) for the at least one point; and
    determine a validity of the estimated second depth information (112), based on determining a measure of dissimilarity between the first depth information (111) and the second depth information (112) for the at least one point.

**2.** The device (100) according to claim 1, wherein:
the first depth information (111) is estimated based on:

>receiving position information with respect to a ground plane, of a camera capturing the image (201) of the scene;
>determining, in the obtained image (101), a set of pixels corresponding to the position of the at least one point for which the height information (102) is obtained; and
>estimating the first depth information (111) based on the determined set of pixels in the obtained image (101) and the received position information of the camera.

**3.** The device (100) according to claim 1 or 2, further configured to:

>adjust the second depth information (112), for the at least one point, when the measure of dissimilarity is above a first threshold; and
>determine a validity of the adjusted second depth information, based on determining a measure of dissimilarity between the first depth information (111) and the adjusted second depth information for the at least one point.

**4.** The device (100) according to one of claims 1 to 3, wherein:
determining the validity comprises verifying a second depth information (112), for the at least one point, when the measure of dissimilarity is below a first threshold.

**5.** The device (100) according to claim 3 or 4, wherein:
adjusting the second depth information (112) comprises fine-tuning a depth estimation system of the other device, based on an optimization technique.

**6.** The device (100) according to claims 3 or 4, further configured to:

>optimize a depth estimation system of the other device (110) based on the first depth information (111); and
>receive, from the other device (110), an adjusted second depth information estimated based on its optimized depth estimation system.

**7.** The device (100) according to one of the claims 1 to 6, further configured to:

>determine a first three-dimensional, 3D, depth-map representation for the at least one object of interest, based on determining a respective first depth information for a subset of points from the set of points; and

>determine a second 3D depth-map representation for the at least one object of interest, based on determining a respective second depth information for the subset of points from the set of points.

**8.** The device (100) according to claim 7, further configured to:
determine a measure of dissimilarity between the first 3D depth-map representation and the second 3D depth-map representation for the at least one object of interest.

**9.** The device (100) according to claim 8, further configured to:

>verify the second 3D depth-map representation, when the measure of dissimilarity is below a second threshold; or
>adjust the second 3D depth-map representation, in particular by adjusting one or more of second depth information, when the measure of dissimilarity is above the second threshold.

**10.** The device (100) according to one of the claims 1 to 9, wherein:
the measure of dissimilarity is determined based on one or more of:

>- computing a mean square error;
>- computing a mean absolute error;
>- computing an absolute relative error.

**11.** The device (100) according to one of the claims 1 to 10, further configured to:

>send an image to a remote device; and
>obtain the measure of dissimilarity, from the remote device.

**12.** The device (100) according to one of the claims 1 to 11, wherein:
the scene is a static scene and the at least one object of interest is located within the static scene.

**13.** A computer program product comprising instructions, which, when the program is executed by a computer, cause the computer to carry out the steps of a method (500) to be performed, wherein the method (500) is for verifying estimated depth information and comprises:

>obtaining (501) an image (101) of a scene, wherein the image (101) comprises at least one object of interest (201) having a set of points (211, 212, 213);
>obtaining (502) a height information (102) for at least one point from the set of points (211, 212, 213) of the object of interest (201);
estimating (503) a first depth information (111) for the at least one point, based on the obtained height information (102) and detecting a corresponding position of the at least one point in the obtained image (101);
receiving (504), from another device (110), a second depth information (112) for the at least one point; and
determining (505) a validity of the estimated second depth information (112), based on determining a measure of dissimilarity between the first depth information (111) and the second depth information (112) for the at least one point.

**Patentansprüche**

1.  Vorrichtung (100) zum Verifizieren von geschätzten Tiefeninformationen, wobei die Vorrichtung (100) konfiguriert ist zum:

    Erhalten eines Bildes (101) einer Szene, wobei das Bild (101) mindestens ein interessierendes Objekt (201) umfasst, das eine Gruppe von Punkten (211, 212, 213) aufweist;
    Erhalten von Höheninformationen (102) für mindestens einen Punkt aus der Gruppe von Punkten (211, 212, 213) des interessierenden Objekts (201);
    Schätzen einer ersten Tiefeninformation (111) für den mindestens einen Punkt basierend auf den erhaltenen Höheninformationen (102) und Erkennen einer entsprechenden Position des mindestens einen Punkts in dem erhaltenen Bild (101);
    Empfangen, von einer anderen Vorrichtung (110), einer zweiten Tiefeninformation (112) für den mindestens einen Punkt; und
    Ermitteln einer Aussagekraft der geschätzten zweiten Tiefeninformation (112), basierend auf dem Ermitteln eines Unähnlichkeitsmaßes zwischen der ersten Tiefeninformation (111) und der zweiten Tiefeninformation (112) für den mindestens einen Punkt.

2.  Vorrichtung (100) nach Anspruch 1, wobei:
    die erste Tiefeninformation (111) geschätzt wird basierend auf:

    einem Empfangen von Positionsinformationen in Bezug auf eine Erdungsfläche einer Kamera, die das Bild (201) der Szene aufnimmt;
    einem Ermitteln, in dem erhaltenen Bild (101), einer Gruppe von Pixeln, die der Position des mindestens einen Punkts entsprechen, für den die Höheninformationen (102) erhalten werden; und

    einem Schätzen der ersten Tiefeninformation (111) basierend auf der ermittelten Gruppe von Pixeln in dem erhaltenen Bild (101) und den empfangenen Positionsinformationen der Kamera.

3.  Vorrichtung (100) nach Anspruch 1 oder 2, die außerdem konfiguriert ist zum:

    Anpassen der zweiten Tiefeninformation (112) für den mindestens einen Punkt, wenn das Unähnlichkeitsmaß über einem ersten Schwellenwert liegt; und
    Ermitteln einer Aussagekraft der angepassten zweiten Tiefeninformation, basierend auf dem Ermitteln eines Unähnlichkeitsmaßes zwischen der ersten Tiefeninformation (111) und der angepassten zweiten Tiefeninformation für den mindestens einen Punkt.

4.  Vorrichtung (100) nach einem der Ansprüche 1 bis 3, wobei:
    das Ermitteln der Aussagekraft ein Verifizieren einer zweiten Tiefeninformation (112) für den mindestens einen Punkt umfasst, wenn das Unähnlichkeitsmaß unter einem ersten Schwellenwert liegt.

5.  Vorrichtung (100) nach Anspruch 3 oder 4, wobei:
    das Anpassen der zweiten Tiefeninformation (112) ein Feinabstimmen eines Tiefenschätzsystems der anderen Vorrichtung basierend auf einer Optimierungstechnik umfasst.

6.  Vorrichtung (100) nach Anspruch 3 oder 4, die außerdem konfiguriert ist zum:

    Optimieren eines Tiefenschätzsystems der anderen Vorrichtung (110) basierend auf der ersten Tiefeninformation (111); und
    Empfangen von der anderen Vorrichtung (110) einer angepassten zweiten Tiefeninformation, die basierend auf ihrem optimierten Tiefenschätzsystem geschätzt wurde.

7.  Vorrichtung (100) nach einem der Ansprüche 1 bis 6, die außerdem konfiguriert ist zum:

    Ermitteln einer ersten dreidimensionalen, 3D-, Tiefenzuordnungsdarstellung für das mindestens eine interessierende Objekt basierend auf einem Ermitteln einer jeweiligen ersten Tiefeninformation für eine Teilgruppe von Punkten aus der Gruppe von Punkten; und
    Ermitteln einer zweiten 3D-Tiefenzuordnungsdarstellung für das mindestens eine interessierende Objekt basierend auf einem Ermitteln einer entsprechenden zweiten Tiefeninformation für die Teilgruppe von Punkten aus der Gruppe von Punkten.

8. Vorrichtung (100) nach Anspruch 7, die außerdem konfiguriert ist zum:
Ermitteln eines Unähnlichkeitsmaßes zwischen der ersten 3D-Tiefenzuordnungsdarstellung und der zweiten 3D-Tiefenzuordnungsdarstellung für das mindestens eine interessierende Objekt.

9. Vorrichtung (100) nach Anspruch 8, die außerdem konfiguriert ist zum:

Verifizieren der zweiten 3D-Tiefenzuordnungsdarstellung, wenn das Unähnlichkeitsmaß unter einem zweiten Schwellenwert liegt; oder
Anpassen der zweiten 3D-Tiefenzuordnungsdarstellung, indem insbesondere eine oder mehrere zweite Tiefeninformationen angepasst werden, wenn das Unähnlichkeitsmaß über dem zweiten Schwellenwert liegt.

10. Vorrichtung (100) nach einem der Ansprüche 1 bis 9, wobei:
das Unähnlichkeitsmaß ermittelt wird basierend auf einem oder mehreren von:

- einem Berechnen eines mittleren quadratischen Fehlers;
- einem Berechnen eines mittleren absoluten Fehlers;
- einem Berechnen eines absoluten relativen Fehlers.

11. Vorrichtung (100) nach einem der Ansprüche 1 bis 10, die außerdem konfiguriert ist zum:

Senden eines Bildes zu einer fernen Vorrichtung; und
Erhalten des Unähnlichkeitsmaßes von der fernen Vorrichtung.

12. Vorrichtung (100) nach einem der Ansprüche 1 bis 11, wobei:
die Szene eine statische Szene ist und sich das mindestens eine interessierende Objekt innerhalb der statischen Szene befindet.

13. Computerprogrammprodukt, das Anweisungen umfasst, die, wenn das Programm von einem Computer ausgeführt wird, den Computer veranlassen, die Schritte eines durchzuführenden Verfahrens (500) auszuführen, wobei das Verfahren (500) geeignet ist zum Verifizieren von geschätzten Tiefeninformationen und umfasst:

Erhalten (501) eines Bildes (101) einer Szene, wobei das Bild (101) mindestens ein interessierendes Objekt (201) umfasst, das eine Gruppe von Punkten (211, 212, 213) aufweist;
Erhalten (502) von Höheninformationen (102) für mindestens einen Punkt aus der Gruppe von Punkten (211, 212, 213) des interessierenden Objekts (201);
Schätzen (503) einer ersten Tiefeninformation (111) für den mindestens einen Punkt basierend auf den erhaltenen Höheninformationen (102) und Erkennen einer entsprechenden Position des mindestens einen Punkts in dem erhaltenen Bild (101);
Empfangen (504), von einer anderen Vorrichtung (110), einer zweiten Tiefeninformation (112) für den mindestens einen Punkt; und
Ermitteln (505) einer Aussagekraft der geschätzten zweiten Tiefeninformation (112), basierend auf dem Ermitteln eines Unähnlichkeitsmaßes zwischen der ersten Tiefeninformation (111) und der zweiten Tiefeninformation (112) für den mindestens einen Punkt.

**Revendications**

1. Dispositif (100) de vérification d'informations de profondeur estimées, le dispositif (100) étant configuré pour :

obtenir une image (101) d'une scène, l'image (101) comprenant au moins un objet d'intérêt (201) comportant un ensemble de points (211, 212, 213) ;
obtenir des informations de hauteur (102) pour au moins un point de l'ensemble de points (211, 212, 213) de l'objet d'intérêt (201) ;
estimer des premières informations de profondeur (111) pour l'au moins un point, sur la base des informations de hauteur (102) obtenues, et détecter une position correspondante de l'au moins un point dans l'image (101) obtenue ;
recevoir, en provenance d'un autre dispositif (110), des secondes informations de profondeur (112) pour l'au moins un point ; et
déterminer une validité des secondes informations de profondeur (112) estimées, sur la base de la détermination d'une mesure de dissimilarité entre les premières informations de profondeur (111) et les secondes informations de profondeur (112) pour l'au moins un point.

2. Dispositif (100) selon la revendication 1, les premières informations de profondeur (111) étant estimées sur la base de :

la réception d'informations de position, par rapport à un plan de sol, d'une caméra capturant l'image (201) de la scène ;
la détermination, dans l'image (101) obtenue, d'un ensemble de pixels correspondant à la position de l'au moins un point dont les informations de hauteur (102) sont obtenues ; et l'estimation des premières informations de profondeur (111), sur la base de l'ensemble déterminé de pixels dans l'image (101) obtenue et des informations de position reçues de la caméra.

**3.** Dispositif (100) selon la configuration 1 ou 2, configuré en outre pour :

régler les secondes informations de profondeur (112), pour l'au moins un point, lorsque la mesure de dissimilarité est supérieure à un premier seuil ; et
déterminer une validité des secondes informations de profondeur réglées, sur la base de la détermination d'une mesure de dissimilarité entre les premières informations de profondeur (111) et les secondes informations de profondeur réglées pour l'au moins un point.

**4.** Dispositif (100) selon l'une des revendications 1 à 3, la détermination de la validité comprenant la vérification de secondes informations de profondeur (112), pour l'au moins un point, lorsque la mesure de dissimilarité est inférieure à un premier seuil.

**5.** Dispositif (100) selon la revendication 3 ou 4, le réglage des secondes informations de profondeur (112) comprenant l'affinement d'un système d'estimation de profondeur de l'autre dispositif, sur la base d'une technique d'optimisation.

**6.** Dispositif (100) selon la configuration 3 ou 4, configuré en outre pour :

optimiser un système d'estimation de profondeur de l'autre dispositif (110) sur la base des premières informations de profondeur (111) ; et
recevoir, en provenance de l'autre dispositif (110), des secondes informations de profondeur réglées, estimées sur la base de son système d'estimation de profondeur optimisé.

**7.** Dispositif (100) selon l'une des revendications 1 à 6, configuré en outre pour :

déterminer une première représentation de carte de profondeur tridimensionnelle (3D) pour l'au moins un objet d'intérêt, sur la base de la détermination de premières informations de profondeur respectives pour un sous-ensemble de points de l'ensemble de points ; et
déterminer une seconde représentation de carte de profondeur 3D pour l'au moins un objet d'intérêt, sur la base de la détermination de secondes informations de profondeur respectives pour le sous-ensemble de points de l'ensemble de points.

**8.** Dispositif (100) selon la configuration 7, configuré en outre pour :
déterminer une mesure de dissimilarité entre la première représentation de carte de profondeur 3D et la seconde représentation de carte de profondeur 3D pour l'au moins un objet d'intérêt.

**9.** Dispositif (100) selon la configuration 8, configuré en outre pour :

vérifier la seconde représentation de carte de profondeur 3D, lorsque la mesure de dissimilarité est inférieure à un second seuil ; ou
régler la seconde représentation de carte de profondeur 3D, notamment en réglant une ou plusieurs des secondes informations de profondeur, lorsque la mesure de dissimilarité est supérieure au second seuil.

**10.** Dispositif (100) selon l'une des revendications 1 à 9, la mesure de dissimilarité étant déterminée sur la base d'un ou plusieurs calculs parmi :

- le calcul d'une erreur quadratique moyenne ;
- le calcul d'une erreur absolue moyenne ;
- le calcul d'une erreur relative absolue.

**11.** Dispositif (100) selon l'une des revendications 1 à 10, configuré en outre pour :

envoyer une image à un dispositif distant ; et
obtenir la mesure de dissimilarité, auprès du dispositif distant.

**12.** Dispositif (100) selon l'une des revendications 1 à 11, la scène étant une scène statique et l'au moins un objet d'intérêt étant situé dans la scène statique.

**13.** Produit-programme informatique comprenant des instructions qui, lorsque le programme est exécuté par un ordinateur, amènent l'ordinateur à mettre en œuvre les étapes d'un procédé (500) à réaliser, le procédé (500) permettant de vérifier des informations de profondeur estimées et comprenant les étapes consistant à :

obtenir (501) une image (101) d'une scène, l'image (101) comprenant au moins un objet d'intérêt (201) comportant un ensemble de points (211, 212, 213) ;
obtenir (502) des informations de hauteur (102) pour au moins un point de l'ensemble de points (211, 212, 213) de l'objet d'intérêt (201) ;
estimer (503) des premières informations de profondeur (111) pour l'au moins un point, sur la base des informations de hauteur (102) obtenues, et détecter une position correspondante de l'au moins un point dans l'image (101) obtenue ;

recevoir (504), en provenance d'un autre dispositif (110), des secondes informations de profondeur (112) pour l'au moins un point ; et

déterminer (505) une validité des secondes informations de profondeur (112) estimées, sur la base de la détermination d'une mesure de dissimilarité entre les premières informations de profondeur (111) et les secondes informations de profondeur (112) pour l'au moins un point.

100

| 101 |

| 101 |

| 102 |

| 111 |

| 110 |

| 112 |

| 112 |

FIG. 1

**FIG. 2**

16

$$\vec{P}$$

$$\vec{N}$$

H

$$\pi$$

**FIG. 3**

FIG. 4

$\overset{500}{\underset{\sim}{\frown}}$

**501** — Obtaining an image of a scene, wherein the image comprises at least one object of interest having a set of points

**502** — Obtaining a height information for at least one point from the set of points of the object of interest

**503** — Estimating a first depth information for the at least one point, based on the obtained height information and detecting a corresponding position of the at least one point in the obtained image

**504** — Receiving, from another device, a second depth information for the at least one point

**505** — Determining a validity of the estimated second depth information, based on determining a measure of dissimilarity between the first depth information and the second depth information for the at least one point

**FIG. 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020152437 A1

- WO 2020140047 A1

**Non-patent literature cited in the description**

- Depth Estimation Method of Light Field Image Based on Occlusion Scene. **LIU XIAOMIN** ; **DU MENGZHU** ; **;MA ZHIBANG** ; **;ZHU YUNFEI** ; **;CHEN PENGBO** ; **;MA FENGYING**. Acta Optica Sinica. Shanghai Kexue Jishu Chubanshe, 31 March 2020, vol. 40, 85-91